Europäisches Patentamt

European Patent Office

Office européen des brevets

(11) Publication number: **0 078 527**
A1

# EUROPEAN PATENT APPLICATION

(21) Application number: 82110037.7

(51) Int. Cl.³: **C 08 F 283/10, C 09 J 3/14**

(22) Date of filing: 29.10.82

(30) Priority: 30.10.81 US 316469

(71) Applicant: **STAUFFER CHEMICAL COMPANY, Westport Connecticut 06880 (US)**

(43) Date of publication of application: **11.05.83 Bulletin 83/19**

(72) Inventor: **Kim, Ki-Soo, 30 North Street, Katonah, NY 10536 (US)**

(74) Representative: **Jaeger, Klaus, Dr. et al, JAEGER & PARTNER Patentanwälte Bergstrasse 48 1/2, D-8035 München-Gauting (DE)**

(84) Designated Contracting States: **BE CH DE FR GB LI NL**

(54) Compositions for forming epoxy adhesive containing acrylate rubber.

(57) Reaction mixtures for forming curable epoxy resin compositions comprise a major amount of epoxy resin, a minor amount of monoethylenically unsaturated monomer capable of forming polyacrylate rubber, and a monomer soluble initiator. Optional ingredients include a crosslinking agent for the rubber-forming monomer, a grafting agent for rubber and epoxy resin, and an epoxy curing agent, preferably having activation conditions which are not satisfied when the initiator is activated. Heating the reaction mixture gives epoxy resin compositions containing polyacrylate rubber, the latter being optionally crosslinked and/or grafted to the epoxy resin. Activation of the curing agent, e.g., by heating, yields cured adhesive compositions.

## COMPOSITIONS FOR FORMING EPOXY
## ADHESIVE CONTAINING ACRYLATE RUBBER

### Background of the Invention

#### Field of the Invention

The present invention relates to compositions for forming epoxy adhesive compositions containing acrylate rubber and to the compositions thus produced.

#### Description of the Prior Art

Various epoxy resin compositions that do not contain an acrylate rubber as a modifier are known to the prior art. For example, acrylic acid is suggested as a curing agent for epoxy resins in Rev. Gen. Caout. Plast. 1973 50(11), 890-892. More recently. U.S. Patent No. 4,028,432 to F. Dawans has taught the use of polybutadiene having carboxylic substitution as a modifier for a liquid epoxide resin.

The polymerization of a major amount of an alkyl methacrylate monomer, e.g., 2-ethylhexyl methacrylate, in the presence of a minor amount of an epoxy resin to form adhesive compositions is shown in Japanese Kokai 78 57,237.

More recently, U.S. Patent No. 4,051,195 to W. F. McWhorter suggested blending epoxide resin and a polyacrylate or polymethacrylate ester of a polyol which contained more than one terminal acrylate or methacrylate group. This blend could then be cured using conventional epoxide resin crosslinking agents. The compositions shown in this patent do not contain a monomer soluble initiator capable of reacting with a monoethylenically unsaturated alkyl acrylate or methacrylate to form an acrylate rubber moiety. In the
McWhorter compositions, the curing agent first reacts
with the epoxide groups to form substituted amine and
hydroxy groups. The thus formed amine will then react
with the acrylate double bond. The result is the
formation of substituted amine groups and saturated
carbon to carbon linkages.

## Summary of the Present Invention

The present invention relates to a reaction mixture comprising: (a) a major amount of an epoxide
resin; (b) a minor amount of a monoethylenically unsaturated monomer capable of forming a polyacrylate
rubber; and (c) an effective amount of a monomer soluble initiator for forming the rubber from monomer (b).
As used herein the terminology "polyacrylate" is
intended to encompass those rubber compositions formed
from both alkyl acrylate monomers as well as alkyl
methacrylate monomers.

When the aforesaid reaction mixture is heated, the
resulting curable composition, which is also part of
the present invention, will comprise a major amount of
epoxy resin modified with a minor amount of polyacrylate rubber.

## Description of the Preferred Embodiments

The major constituent present in the reaction mixture described earlier which is used to form the curable
adhesive compositions of the present invention is an
epoxide resin such as conventionally used in the art to formulate epoxide adhesives. Generally, the reaction mixture and resulting polyacrylate-modified epoxide compositions can contain from about 65% to about 99%, by weight, of the epoxide resin, preferably from about 80% to about 95%, by weight.

The epoxide resins useful in this invention are those resins which contain more than one 1,2-epoxy group per molecule. They can be saturated or unsaturated, aliphatic, cycloaliphatic or heterocyclic and can be monomeric or polymeric in nature. The weight per epoxide of such resins will be within the range of about 100 to about 2,000. Preferably, the epoxide resins will contain glycidyl ether or ester groups, will be liquid rather than solid, and will have weight per epoxide in the range of about 110 to about 500, most preferably about 175 to about 250.

Useful epoxide resins are the glycidyl polyethers of polyhydric phenols which are derived from an epihalohydrin, e.g., epichlorohydrin, and a polyhydric phenol. Examples of such polyhydric phenols include resorcinol, hydroquinone, bis(4-hydroxyphenyl)-2,2-propane, or bisphenol A as it is commonly called, 4,4'-dihydroxybenzophenone, bis(4-hydroxyphenyl)-1,1-ethane, bis(4-hydroxyphenyl)-1,1-isobutane, bis(4-hydroxyphenyl)2,2-butane, bis(2-dihydroxynaphthyl) methane, phloroglucinol, and bis(4-hydroxyphenyl) sulphone. Additional polyhydric phenols are novolac resins containing more than two phenol, or substituted phenol, moieties linked through methylene bridges as well as halogenated, e.g., brominated and chlorinated, phenolic compounds.

C-6199

Additional epoxide resins are glycidyl polyethers of polyhydric alcohols prepared by reacting a polyhydric alcohol with an epihalohydrin using an acidic catalyst, e.g., boron trifluoride, and subsequently treating the resulting product with an alkaline dehydrohalogenating agent. Included among the polyhydric alcohols that can be used in the preparation of these polyepoxides are glycerine, ethylene glycol, propylene glycol, diethylene glycol, hexanediol, hexanetriol, trimethylol propane, trimethylol ethane, pentaerythritol and the like.

Other epoxide resins are glycidyl esters of polycarboxylic acids which are derived from an epihalohydrin and a polycarboxylic acid. Examples of polycarboxylic acids include phthalic acid or its anhydride, isophthalic acid, terephthalic acid, tetrahydrophthalic acid, hexahydrophthalic anhydride, adipic acid, dimerized fatty acids, dibasic acids made from an unsaturated fatty acid and acrylic acid, and the like.

The most preferred epoxide resins are glycidyl polyethers or polyhydric phenols, particularly the glycidyl polyether of bisphenol A.

The reaction mixture used to form the curable epoxy-polyacrylate rubber modified compositions of this invention also contains a minor amount of an alkyl acrylate or alkyl methacrylate monomer (or mixtures thereof) capable of forming a rubbery particle having a $T_g$ of less than about $40^{\circ}C$. The amount of such monomer can range from about 1% to about 49% by weight of the epoxide resin, preferably about 5% to about 25%, by weight. Representative monomers which can be selected for use are the unsubstituted and

C-6199

substituted $C_1$ to $C_{20}$ alkyl acrylates and alkyl methacrylates and include n-butyl acrylate, ethyl acrylate, 2-hydroxyethyl acrylate, 2-ethylhexyl acrylate, 2-butyl methacrylate, 2-ethylhexyl methacrylate, and decyl methacrylate.

The resulting curable epoxy-polyacrylate rubber modified composition contains a similar major amount of epoxy resin and a similar minor amount of polyacrylate rubber derived from the aforesaid acrylate and/or methacrylate monomers.

The reaction mixture can also contain an optional crosslinking agent for the acrylate and/or methacrylate monomer component as well as an optional grafting agent for the polyacrylate rubber and epoxy.

The crosslinking agent for the rubber-forming monomer, or monomers, can be a polyethylenically unsaturated crosslinking monomer such as conventionally employed to form crosslinked acrylate and/or methacrylate rubber polymers. It can be present at from about 0.01% to about 10% by weight of the monomers forming the rubber. Representative crosslinking agents, which contain at least two ethylenically unsaturated groups, include such compounds as allyl methacrylate, divinyl benzene, diethylene glycol dimethacrylate, ethylene glycol dimethacrylate, trimethylolpropane trimethacrylate, methylene-bis-acrylamine, diethylene glycol diacrylate, ethylene glycol diacrylate, divinyl ether, diallyl fumarate, diallyl phthalate, divinyl sulfone, divinyl carbitol, triethylene glycol dimethacrylate, trimethylene glycol diacrylate, butylene glycol diacrylate, pentamethylene glycol diacrylate, glyceryl triacrylate, octylene glycol diacrylate, trimethylene propane triacrylate, the tetraacrylate ester of pentaerythritol, and various diallyl phosphonates.

C-6199

The grafting agent can be a difunctional monomer containing a vinyl group and an epoxy reactive functional group (e.g., a carboxy group) or containing a vinyl group and an epoxy group. Examples of suitable grafting agents include ethylenically unsaturated carboxylic acids (e.g., the $C_2$-$C_{10}$ alkenyl carboxylic acids) as well as the glycidyl esters of those acids. Representative compounds include acrylic acid, methacrylic acid and glycidyl methacrylate. These grafting agents can be present at from about 0.1% to about 20%, by weight of the monomers forming the polyacrylate rubber.

In order to form the curable epoxy modified with polyacrylate rubber of the present invention, the epoxy resin and rubber-forming monomer (optionally with either or both of crosslinking and grafting agent) are polymerized in the presence of a catalytically effective amount of a monomer-soluble initiator, (e.g., 0.01% to 10%, by weight of rubber-forming monomer) at a temperature (e.g., 10 to 150°C.) and for a length of time (e.g., 0.1 to 50 hours) to achieve formation of the rubber in the epoxy composition. Representative initiators include the azo initiators (e.g., azobisisobutyronitrile), the peroxide initiators (e.g., lauroyl or benzoyl peroxide), or the perioxydicarbonate initiators (e.g., isopropylperoxy dicarbonate). If crosslinking agent is also present, the initiator will produce a crosslinked polyacrylate rubber. Presence of grafting agent will produce grafting of the polyacrylate rubber and epoxy resin.

The epoxy resin composition containing polyacrylate rubber finds utility as one component in a curable adhesive system.  It will generally comprise from about 1% to 99%, by weight of the curable system. The other major component of such a system is a curing agent for the epoxy resin and it can be present at from about 99% to about 1%, by weight of the system. Representative curing agents include aliphatic polyamines having at least 3 active amine hydrogen atoms per molecule.  Examples of such amines are the polyalkylene polyamines, e.g., diethylene triamine, triethylene tetraamine, tetraethylene pentamine and pentaethylene hexamine.  Additional useful amines are ethylene diamine, tetramethylene diamine, hexamethylene diamine, xylylene diamine, and the like.  Adducts of such amines with acrylonitrile, acrylic acid, ethyl acrylate and the like are also useful if the adduct contains at least three active amine hydrogen atoms. Also included as useful amines are amidoamines obtained by reacting polyamines with fatty acids, both monomers and dimers, provided of course that the resulting amidoamine contains at least 3 active amine hydrogen atoms per molecule.

Additional curing agents which can be used with the compositions of this invention include the amine terminated polyamides, aromatic amines, mercaptans, anhydrides, isocyanates, and catalyst/latent hardeners such as boron trifluoride-monoethylamine and dicyandiamide.

If desired, the curing agent could, under certain circumstances, be used in the original reaction mixture containing epoxy resin, acrylate and/or methacrylate rubber-forming monomer, and initiator.  If the ultimate user of the cured adhesive immediately employs

C-6199

the reaction mixture, heating of it will both form the rubber via action of the initiator and will also cure the adhesive via action of the curing agent. If a curable system is desired, however, the initiator will have to be selected so that it has activation conditions which are not satisfied when the initiator is activated to form the rubber. In this way, the reaction mixture can be heated, for example, to only form the rubber component (optionally crosslinked and/or grafted) with the curing agent remaining in a latent state until activated at a later time, e.g., by being heated to a higher temperature.

The curable compositions, or reaction mixture to form it, of the instant invention can be compounded with various fillers, reinforcing agents, dyes, pigments and other additives depending upon the ultimate end use and desired properties. The compositions can also be dissolved in and used from solvents, e.g., aromatic hydrocarbons, ethers, ether-esters, ether-alcohols, esters, alcohols, ketones and the like. However, these compositions can be used with no solvents, i.e., at 100% solids.

The curing reaction, if desired, can be accelerated by heating, e.g., to a temperature of up to $300^{\circ}$C., depending upon curing agent.

The following Examples illustrate certain preferred embodiments of the present invention.

## EXAMPLE 1

This Example illustrates several embodiments of the present invention in which a curable polyacrylate-grafted epoxy composition is formed, cured and evaluated as an adhesive.

To the diglycidyl ether of bisphenol A (250 gm. of EPON 828 diepoxide), having an epoxide equivalent of about 190, was added 25 gm. of butyl acrylate, 1.28 gm. of acrylic acid grafting agent, 0.25 gm. of diethylene glycol diacrylate crosslinker, and 1.0 gm. of benzoyl peroxide initiator. The mixture was heated at $80-85^{\circ}$C. under nitrogen with stirring for about 10-18 hours. A portion of the resulting polyacrylate-grafted epoxy composition was then mixed with an epoxide curing agent. Lap shear bonds were prepared by pressing a small amount of the mixture of epoxy resin composition between two acid etched steel panels, and the compositions were allowed to cure at $150^{\circ}$C. for 30 minutes. The tensile shear strength of the bond formed by the cured polyacrylate-grafted epoxy was compared with that of the cured unmodified epoxy (EPON 828 brand):

EXAMPLE 1 (cont'd.)

| Resin - - - | Unmodified Epoxy | | Polyacrylate-Grafted Epoxy | |
|---|---|---|---|---|
| Curing Agent: | U brand* | V-40 brand** | U brand* | V-40 brand** |
| Resin/ Curing Agent (Wt. Ratio): | 100/25 | 100/70 | 100/25 | 100/70 |
| Tensile Shear Strength $(kg/cm^2)$ ***: | 179.3 | 317.8 | 212.3 | 378.3 |

\* Polyamine adduct curing agent for epoxy resins (Shell Chemical).

\*\* Polyamide curing agent for epoxy resins (Shell Chemical).

\*\*\* ASTM D-1002-72.

The above data indicate that the shear strength of the epoxy adhesive can be increased by incorporation of polyacrylate rubber.

C-6199

EXAMPLE 2

This illustrates other embodiments of the claimed invention.

To the diglycidyl ether of bisphenol A (EPON 828 brand) was added butyl acrylate, acrylic acid, diethylene glycol diacrylate, and benzoyl peroxide. The acrylate-containing monomers in the epoxy were polymerized to form a crosslinked polyacrylate rubber by heating the mixture at 80-85°C. A tri($C_8$-$C_{10}$) alkyl methyl ammonium chloride catalyst (ADOGEN 464 from Sherex Chemical) was then added for certain runs to assist the remaining stages of the reaction, and the resultiing mixture was heated at 115°C. for 4 hours. The acid number was determined before and after this latter heating step which produced grafting of the polyacrylic rubber and epoxy resin. A decrease in acid number indicates that the carboxy groups of the polyacrylate rubber reacted with the epoxy groups of the epoxy resin. All amounts of the reaction ingredients given in the Table below are parts by weight (pbw):

EXAMPLE 2 (cont'd.)

TABLE

| Run No: | 1 | 2 | 3 |
|---|---|---|---|
| Reaction Ingredients | | | |
| Diepoxide | 100 | 100 | 100 |
| Butyl acrylate | 15 | 15 | 15 |
| Acrylic acid | 0.37 | 0.74 | 0.75 |
| Diethylene glycol diacrylate | 0.075 | 0.15 | 0.075 |
| Benzoyl peroxide | 0.3 | 0.3 | 0.3 |
| Substituted ammonium chloride catalyst | 0.006 | 0.006 | 0 |
| Acid Number* | | | |
| Before grafting* | 2.0 (2.5) | 3.8 (5.0) | --- (5.0) |
| After grafting | 0.18 | 0.13 | 1.7 |

* Values in parenthesis are the theoretical values.

C-6199

## EXAMPLE 3

This Example illustrates certain of the adhesive properties of various polyacrylate-grafted epoxy compositions prepared in accordance with the process shown in Example 2.

The following Table illustrates the reaction ingredients used and the results obtained with Run No. 5 being a control run using unmodified epoxy resin:

### TABLE

| Run No: | 1 | 2 | 3 |
|---|---|---|---|
| Reaction Ingredients (in pbw) | | | |
| Diepoxide (EPON 828 brand) | 100 | 100 | 100 |
| Butyl acrylate | 10 | 15 | 15 |
| Acrylic acid | 0.5 | 0.75 | 0.75 |
| Diethylene glycol diacrylate | 0.05 | 0.075 | 0.075 |
| Benzoyl peroxide | 0.5 | 0.75 | 0.75 |
| ADOGEN 464 catalyst | 0.006 | 0.006 | 0 |
| Brookfield viscosity of Polyacrylate-grafted Epoxy (Pa·s) | 40 | 300 | 200 |
| Adhesive Properties* | | | |
| Tensile shear (kg/cm$^2$) (ASTM D-1002-72) | 3.80 | 4.15 | 3.87 |
| Block Impact (J/cm$^2$) (ASTM D-950-78) | 2.27 | 2.33 | 2.46 |
| T-Peel Strength (kg/cm.) (ASTM D-1876-72) | 2.14 | 2.67 | --- |

C-6199

EXAMPLE 3 (cont'd.)

TABLE (cont'd.)

| Run No: | 4 | 5 |
|---|---|---|
| Reaction Ingredients (in pbw) | | |
| Diepoxide (EPON 828 brand) | 100 | 100 |
| Butyl acrylate | 20 | 0 |
| Acrylic acid | 1.0 | 0 |
| Diethylene glycol diacrylate | 0.10 | 0 |
| Benzoyl peroxide | 1.0 | 0 |
| ADOGEN 464 catalyst | 0.006 | 0 |
| Brookfield viscosity of Polyacrylate-grafted Epoxy (Pa·s) | 750 | 36 |
| Adhesive Properties* | | |
| Tensile shear (kg/cm$^2$) (ASTM D-1002-72) | 3.94 | 3.16 |
| Block Impact (J/cm$^2$) (ASTM D-950-78) | 1.97 | 2.00 |
| T-Peel Strength (kg/cm.) (ASTM D-1876-72) | --- | 1.43 |

* determined on acid etched steel. The curing agent was a polyamide curing agent (V-40 brand from Shell Chemical), the weight ratio of resin to curing agent was 100/70, the cure temperature was 150°C., and the cure time was 30 minutes.

In general, higher Brookfield viscosity values, tensile strength, and impact and peel strength were obtained by modifying the epoxy resin with polyacrylate rubber.

C-6199

EXAMPLE 4

This Example illustrates further embodiments of the present invention.

To diepoxy resin (EPON 828 brand) was added phthalic anhydride, a high temperature curing agent, butyl acrylate, acrylic acid, butylene glycol dimethacrylate and benzoyl peroxide. The mixture was then heated at 80°-90°C. for 1-3 hours under nitrogen with stirring to form an uncured polyacrylate-grafted epoxy resin composition. This composition was then later cured by heating at 150°C. for six hours and twenty minutes, and the adhesive properties when mounted on acid etched steel were measured. The Table which follows sets forth the details with Run No. 5 being a control run using unmodified epoxy:

TABLE

| Run No: | 1 | 2 | 3 |
|---|---|---|---|
| Reaction Ingredients (in pbw) | | | |
| Diepoxide resin | 50 | 50 | 50 |
| Butyl acrylate | 10 | 10 | 10 |
| Acrylic acid | 0 | 0 | 1.0 |
| Butylene glycol dimethacrylate | 0 | 0.1 | 0 |
| Phthalic anhydride | 16 | 16 | 16 |
| Tensile shear strength ($kg/cm^2$) (ASTM D-1002-72) | 235.5 | 181.4 | 195.5 |

C-6199

EXAMPLE 4 (cont'd.)

TABLE (cont'd.)

| Run No: | 4 | 5 |
|---|---|---|
| Reaction Ingredients (in pbw) | | |
| Diepoxide resin | 50 | 50 |
| Butyl acrylate | 10 | 0 |
| Acrylic acid | 1.0 | 0 |
| Butylene glycol dimethacrylate | 0.1 | 0 |
| Phthalic anhydride | 16 | 16 |
| Tensile shear strength (kg/cm$^2$) (ASTM D-1002-72) | 158.9 | 218.0 |

C-6199

## EXAMPLE 5

This Example illustrates the formation of a blend of polyacrylate and epoxy which, when cured, forms a polyacrylate-modified epoxy composition having adhesive properties.

To 250 gm. of the diglycidyl ether of bisphenol A (EPON 828 brand), having an epoxide equivalent of about 190, was added 25 gm. of butyl acrylate, 1.30 gm. of glycidyl methacrylate, 0.27 gm. of diethylene glycol diacrylate crosslinker, and 0.5 gm. of benzoyl peroxide. The acrylate-containing monomers were then polymerized by being heated to 80-85°C. under nitrogen with stirring for about 10-18 hours. A portion of the resulting blend of polyacrylate containing reactive epoxy groups and epoxy resin was then combined with epoxy curing agent, cured to form an adhesive composition, and the strength of the adhesive bond formed therefrom was measured. The Table sets forth the results obtained:

### TABLE

| Run No: | 1 | 2 |
|---|---|---|
| Curing Agent* | U brand | V-40 brand |
| Tensile Shear Strength** (kg/cm$^2$) (ASTM D-1002-72) | 255.9 | 388.1 |

\* U brand is a polyamine adduct curing agent and V-40 is a polyamide curing agent. Both are available from Shell Chemical. The resin/curing agent weight ratios were 100/25 for U brand and 100/70 for V-40 brand.

\*\* the adhesion to acid-etched steel was measured with the adhesive being allowed to cure at 150°C. for 30 minutes.

C-6199

## EXAMPLE 5 (cont'd.)

The epoxy composition in this Example exhibits higher shear strength as compared to an unmodified epoxy resin, as shown in Example 1.

C-6199

0078527

The foregoing Examples should not be construed in a limiting sence. The scope of protection that is sought is set forth in the claims which follow.

C-6199

What is Claimed:

1. A reaction mixture, for forming a curable epoxy resin composition containing polyacrylate rubber, which comprises a major amount of epoxy resin, a minor amount of a monoethylenically unsaturated monomer capable of forming a polyacrylate rubber, and an effective amount of a monomer soluble initiator for forming the rubber from the monomer.

2. A mixture as claimed in Claim 1 wherein the epoxy resin comprises from about 65% to about 99%, by weight of the mixture.

3. A mixture as claimed in Claim 1 wherein the monomer comprises from about 49% to about 1%, by weight of the epoxide resin.

4. A mixture as claimed in Claim 1 wherein the initiator comprises from about 0.01% to about 10%, by weight of the monomer.

5. A mixture as claimed in Claim 1 wherein the epoxide resin comprises from about 80% to about 95%, by weight of the composition and the monomer comprises from about 25% to about 5%, by weight of the epoxide resin.

6. A mixture as claimed in Claim 1 which also contains a crosslinking agent for the rubber-forming monomer.

7. A mixture as claimed in Claim 1 which also contains a grafting agent for the polyacrylate rubber and epoxy resin.

8. A mixture as claimed in Claim 7 wherein the grafting agent contains a vinyl group and an epoxy reactive functional group.

C-6199

9. An epoxy resin composition comprising a major amount of an epoxy resin and a minor amount of a polyacrylate rubber.

10. A composition as claimed in Claim 9 wherein the epoxy resin comprises from about 65% to about 99%, by weight of the composition.

11. A composition as claimed in Claim 9 wherein the polyacrylate rubber comprises from about 49% to about 1%, by weight of the epoxy resin.

12. A composition as claimed in Claim 9 wherein the polyacrylate rubber is crosslinked.

13. A composition as claimed in Claim 12 wherein the rubber is crosslinked with a polyethylenically unsaturated crosslinking agent.

14. A composition as claimed in Claim 9 wherein the polyacrylate rubber and epoxy resin are grafted to one another.

15. A composition as claimed in Claim 9 wherein the polyacrylate rubber comprises a polymer selected from the group consisting of the polymers of alkyl acrylates and the alkyl methacrylates.

16. A composition as claimed in Claim 9 wherein the epoxy resin is a glycidyl polyether of the reaction product between a polyhydric phenol and an epihalohydrin.

17. A composition as claimed in Claim 9 wherein the polyacrylate rubber is formed of a crosslinked alkyl acrylate and has a $T_g$ of less than about 40°C., the epoxy resin is present at about 80% to about 95%, by weight of the composition, and the rubber is present at from about 25% to about 5%, by weight of the epoxy resin.

C-6199

18. A curable adhesive system containing any of the epoxy resin compositions of Claims 9-17 and an effective amount for curing of an epoxy curing agent.

19. A curable adhesive system containing any of the epoxy resin compositions of Claims 9-17 and an effective amount for curing of an epoxy curing agent selected from the group consisting of polyamine, polyamine adduct and polyamide curing agents.

C-6199

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| D,A | --- <br> PATENTS ABSTRACTS OF JAPAN, vol. 2 no. 93, C Section, 29th June 1978, page 1621C78 <br> & JP - A - 53 57237 (RICOH K.K.) 24-04-1978 * Whole abstract * | 1 | C 08 F 283/10 <br> C 09 J   3/14 |
| A | --- <br> FR-A-2 208 936   (GEO L. SCOTT) * Claims * | 1 | |
| A | --- <br> GB-A-1 255 527   (BAYER) * Claims * | 1 | |
| A | --- <br> FR-A-2 343 009   (HOECHST) * Claims * <br> ----- | 1 | |

TECHNICAL FIELDS SEARCHED (Int. Cl. ³)

C 08 F 283/10
C 09 J   3/14
C 08 G   59/16

The present search report has been drawn up for all claims

| Place of search | Date of completion of the search | Examiner |
|---|---|---|
| THE HAGUE | 07-02-1983 | FOUQUIER J.P. |